# EUROPEAN PATENT SPECIFICATION

(11) **EP 0 697 536 B1**
(45) Date of publication and mention of the grant of the patent: **06.11.2002**
(21) Application number: 95112777.8
(22) Date of filing: 14.08.1995
(51) Int. Cl.: F16D 55/224

(54) **Disc brake caliper support**
Scheibenbremssattelträger
Support d'étrier de frein à disque

(30) Priority: 18.08.1994 JP 21526194
(43) Date of publication of application: 21.02.1996
(73) Proprietor: AKEBONO BRAKE INDUSTRY CO., LTD., Chuo-ku Tokyo 103 (JP)
(72) Inventor: Yamadera, Shinichi, Kami Konosu-shi, Saitama (JP); Ikegami, Hiroshi, Kitakatsushika-gun, Saitama (JP); Nishikawa, Yutaka, Kumagaya-shi, Saitama (JP)
(74) Representative: Grünecker, Kinkeldey, Stockmair & Schwanhäusser Anwaltssozietät

(56) References cited:
- FR-A- 2 320 463
- GB-A- 2 069 078
- US-A- 4 427 096

## Description

The present invention relates to a caliper support mechanism of a disc brake according to the preamble of independent claim 1.

A disc brake of the type in which the caliper is slidably supported by the slide pin, and the slide pin is fixed to a lug of the caliper by means of a bolt is known. Such a structure that a stepped portion is formed in the lug of the caliper in order to stop the turn of the slide pin which otherwise would be turned together with the bolt when the bolt is screwed into the threaded hole of the end face of the slide pin and tightened thereto, and the flat side of a head of the slide pin is brought into contact with the end face of the stepped portion, thereby stopping the turn of the slide pin, is also known as disclosed in Post-examined Japanese Utility Model Publication No. Sho. 61-21619.

Furthermore, in FR-A-2 320 463 a caliper support mechanism is described which comprises a brake body with a brake disc, brake shoes, supported brackets, and fastening bolts, and a mounting device, wherein the mounting device is adapted to prevent the bolts from turning when a braking torque is acting on the support brackets.

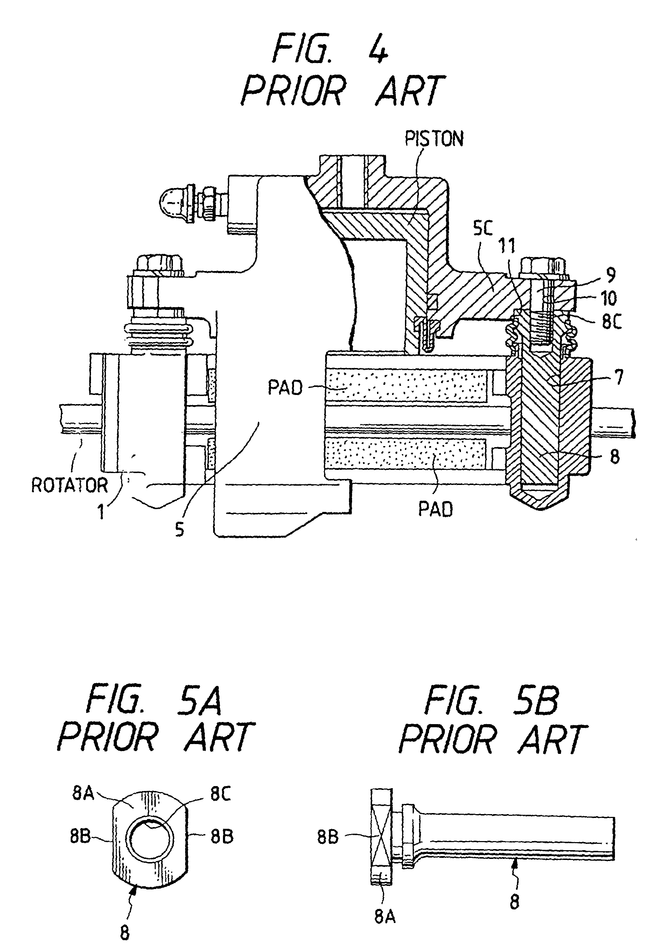

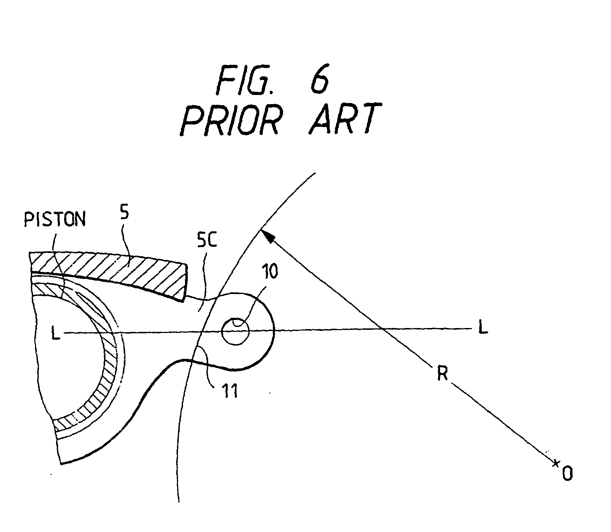

The conventional art will briefly be described with reference to Figs. 4 to 6.

A bolt 9 is inserted into a bolt hole 10 of a lug 5C of a caliper 5. A flat side 8B of a head 8A of a slide pin 8 is brought into contact with the end face of a stepped portion 11 of the lug, to thereby stop the turn of the slide pin. The bolt 9 is screwed into a screw hole 8C of the end face of the slide pin 8 and tightened thereto, so that the slide pin 8 is fixed to the lug 5C. The slide pin 8 is slidably inserted into a pin guide hole 7 of a support bracket 1, whereby the support bracket 1 slidably supports the caliper 5.

The stepped portion 11 is formed in the lug 5C of the caliper 5. The head 8A is bevelled to have flat sides 8B. The flat side 8B is brought into contact with the end face of the stepped portion 11, to thereby prevent the turn of the slide pin 8. The end face of the stepped portion is arcuately incurved in cross section.

In the disc brake of the type in which the caliper is slidably supported by the slide pin, viz., the pin type disc brake, under a braking force, the brake pad pushes the support brackets outwardly when viewed horizontally. The support bracket is slightly bent aside in the braking direction, by the pushing force of the brake pad. As the deflection of the support bracket, the pin guide hole of the support bracket is displaced with respect to the slide pin. By the displacement of the pin guide hole, the sliding resistance of the slide pin increases, thereby hindering a smooth motion of the slide pin within the pin guide hole. The wear of the slide pin is promoted, so that the durability thereof is reduced and a resistance to the returning motion of the caliper increases. Drag of the brake and the squeak of the brake take place. An additional problem of the conventional art is that much and care work is required for arcuately curving inward the end face of the stepped portion of the lug of the caliper.

The present invention was made in view of the foregoing difficulties accompanying the conventional caliper support mechanism.

It is an object of the present invention to provide a caliper support mechanism of a disc brake which is capable of providing the smoothest possible motion of the slide pin within the pin guide hole of the slide pin.

The object is solved according to the present invention by a caliper support mechanism of a disc brake as indicated above comprising said end face of said lug being arcuately incurved and a center of a circle defined by said arcuately incurved end face of said lug is coincident with a center of said bolt hole.

A further advantage of the present invention is to provide a caliper support mechanism of a disc brake which is capable of reducing the squeezing of the slide pin by the support bracket as small as possible by making use of the interaction of the end face of the stepped portion of the lug of the caliper and the flat side of the head of the bolt head.

A further advantage of the present invention is to provide a caliper support mechanism of a brake disc which makes easy the work for shaping the end face of the stepped portion of the lug of the caliper.

Further preferred embodiments of the present invention are laid down in the further subclaims.

In the following, the present invention is explained in greater detail by means of several embodiments thereof in conjunction with the accompanying drawings, wherein:
Fig. 1 is a view for explaining the operation of the present invention by a model;
Fig. 2 is a diagram showing an overall caliper with a slide pin firmly attached thereto;
Fig. 3 is a cross sectional view taken on line III-III in Fig. 2 (boot and the like are omitted);
Fig. 4 is a view partially in cross section showing a conventional art;
Fig. 5A is a front view showing the slide pin in Fig. 1, and Fig. 5B is a side view of the slide pin; and
Fig. 6 is an enlarged view showing a lug of the caliper of the conventional art of Fig. 4.

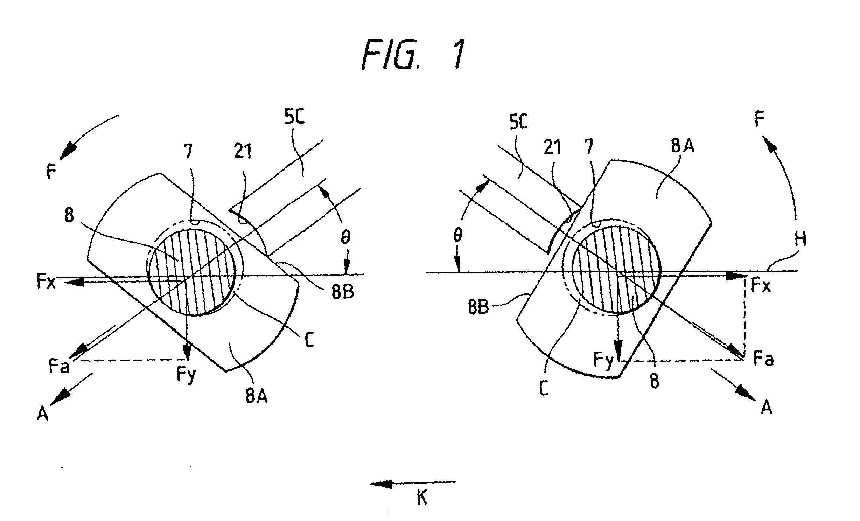

The preferred embodiment of the present invention and the operation of which will now be described with reference to Figs. 1 to 3.

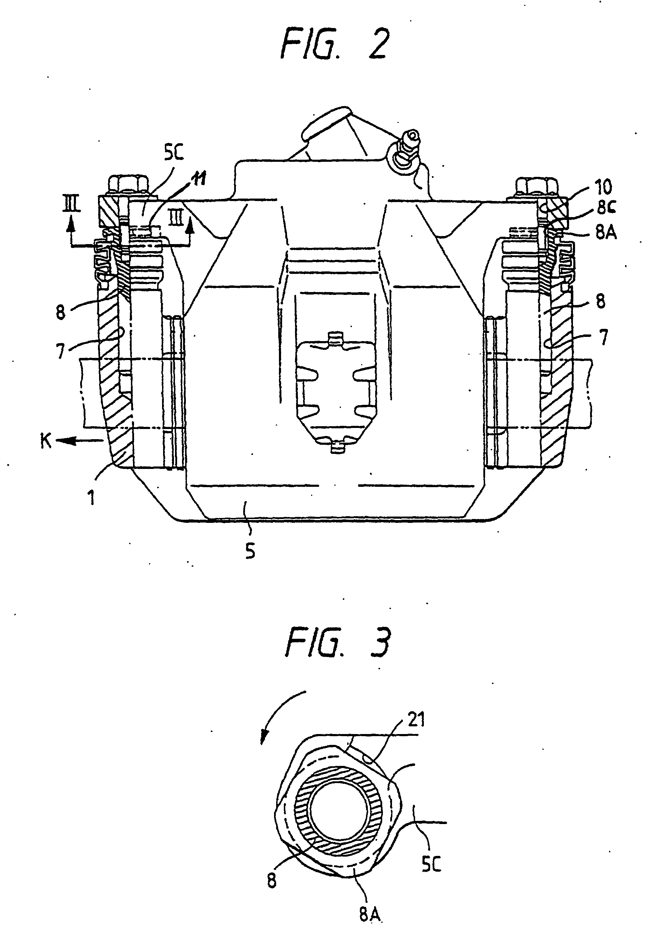

Fig. 1 schematically illustrates the relationship among the end face 21 of the stepped portion of the lug, the head 8A of the slide pin, the slide pin 8, and the pin guide hole 7. Fig. 2 is a view showing the overall caliper with the slide pin 8 firmly attached thereto, and Fig. 3 is a cross sectional view taken on line III-III in Fig. 2.

In Figs. 1 and 3, the end face 21 of the lug, which is arcuately incurved, is coaxial with the slide pin 8 (the center of the slide pin is coincident with the center of the bolt hole). In other words, the center of a circle defined by the arcuately incurved end face is coincident with the center of the bolt hole of the lug. The arcuately incurved end face 21 is directed obliquely and outwardly (in the direction of an arrow A in Fig. 1) with respect to the horizontal line in the lug of the caliper. The arcuately incurved end face 21 of the stepped portion 11 of the lug 5C is arranged such that the center line of the lug 5C, which is perpendicular to the bottom of the arcuately curved end face 21 of the stepped portion 11, is slanted at an angle θ (30° in this embodiment) with respect to the horizontal line H. The bolt is screwed into the threaded bolt hole 10 of the end face of the slide pin 8, and tightened thereto.

A torque of the direction of an arrow F acts on the slide pin 8 and the head 8A as well. The flat side 8B is forcibly pressed against the end face 21 of the stepped portion, whereby the turn of the slide pin is prevented. The slide pin 8 receives a reaction force from the end face 21. That is, a force Fa of the direction of an arrow A acts on the slide pin 8, so that the component Fx of the force Fa presses the slide pin 8 against the inner surface of the pin guide hole 7. As a result, a gap C is formed between the inner surface of the pin guide hole 7 and the outer surface of the slide pin 8 that is opposite to the outer surface thereof where it is pressed against the inner surface by the component force Fx. In this state, the slide pin 8 is fixed to the lug of the caliper. At this time, the component Fy of the force Fa is zeroed as the result of a free motion of the caliper. Accordingly, the slide pins 8 and 8 are mounted on the caliper 5 in a state that the slide pins 8 and 8 are respectively pressed against the inner surfaces of the pin guide holes 7 by proper forces since the component forces Fx, of which the directions are opposite to each other, act on the slide pins 8 and 8. As a result, a good slide movement of the slide pin 8 within the pin guide hole 7 is ensured.

It is supposed that in this state, a braking force acts on the caliper. Then, the brake pad pushes the left support bracket 1 (Fig. 2) to the left (direction of an arrow K), so that it is displaced to the left. With the displacement of the left support bracket 1, the pin guide hole 7 thereof is displaced to the left. However, the displacement of the pin guide hole 7 is absorbed by the large gap C. At this time, if the left slide pin 8 hits the inner wall (right side) of the pin guide hole 7, it is not thrust forcibly by the latter. The left slide pin 8 hits the inner surface (right side) of the pin guide hole 7, and is pushed to the left. Then, the whole caliper 5 (Fig. 2) is pushed to the left.

The right slide pin 8 is pulled to the left. At this time, the right slide pin 8 is allowed to displace to the left with respect to the pin guide hole since the right slide pin 8 is fixed to the lug of the caliper at a location closer to the right side with respect to the pin guide hole 7 of the right support bracket 1, and the large gap C is present on the left side of it. For this reason, the sliding resistance of the right slide pin does not increase.

In the above-mentioned operation of the disc brake, the brake pad is pushed to the left by the rotation of the rotor, and the left support bracket is pushed to the left. The same thing is true for a case where when the vehicle wheels are turned in the opposite direction, the brake operates and the brake pad pushes the right support bracket to the right.

Thus, the caliper support mechanism can reduce the sliding resistance of the slide pin as small as possible.

So long as the angle θ for the end face of the stepped portion (angle with respect to the horizontal line containing the center of the bolt hole) is within the range from 0 to 90°, the caliper support mechanism must operate as mentioned above when theoretically considered. When the angle θ = 0°, the weight of the caliper acts on the slide pin to push it downward. Therefore, the position of the slide pin 8 when the angle θ = 0° is almost equal to that of the slide pin 8 when the angle θ = 10°. When the angle θ ≒ 90°, it is almost equal to that in a case where the slide pin 8 is fixed in a state that it is in contact with the bottom of the pin guide hole. In this state, the actual effects are not remarkable. For this reason, it is preferable to set the angle θ within the range from 10° to 80°.

It is believed that the object, construction and the effects of the present invention will be understood from the foregoing description since it is not directed to the specific mechanism and structure. A specific example of the present invention will briefly be described for reference.

A pin type disc brake used was specified: the rotor diameter = 280 mm, the maximum braking torque = 150 kg-m, and caliper weight = 5 kg, diameter of the slide pin = 9.7 mm, inner diameter of the pin guide hole = 10 mm, bolt diameter = 8 mm, diameter of the bolt hole = 8.5 mm, curvature radius of the end face (of the stepped portion of the lug) = = 28 mm, length of the end face = 6 mm, angle θ = 40°, and gap C = 0.57 mm. A quantity of a displacement of the tip of the support bracket when the maximum braking torque is 150 kg-m was 0.3 mm in this embodiment, although it depends on the rigidity of the support bracket. This value is within 0.57 mm of the gap C. The sliding resistance of the slide pin does not increase. When angle θ = 10°, the gap C was 0.60 mm, and when angle θ = 80°, the gap C was 0.35 mm. For the vehicle of comparison, when angle θ = 0°, the gap C was 0.6 mm, and when angle θ = 90°, the gap C was 0.15 mm.

A specific maximum quantity of the displacement of the support bracket when a braking force is applied depends largely on a state of the application, quick or slow, of the braking force and the rigidity of the support bracket. Therefore, the maximum quantity of the displacement is not instructive in particular in evaluating the present invention.

However, the comparison of the sliding resistance of the caliper of the present invention under the maximum braking force with that of the conventional caliper in which the end face of the stepped portion is directed inward will show outstanding effects of the invention. In this case, the measurement of the sliding resistance of both the calipers are carried out in a state that other conditions than the above are set to be equal to each other.

The unique structure that the end face 21 is coaxial with the bolt hole 10 allows these members to be worked in one step.

Further, when the braking torque acts on the support bracket, the slide pin is not thrust forcibly by the support bracket, thereby allowing the slide pin to smoothly be slid within the pin guide hole. Accordingly, the drag of the brake and the squeak of the brake are reduced as small as possible.

The problems of the conventional art are solved by unique shape of the end face of the stepped portion of the lug of the caliper, and the unique positional relationship between the end face and the flat side of the head of the slide pin.

The solving means do not require any alteration or addition of mechanical components and the method of working them.

Accordingly, neither increase of weight nor increase of the manufacturing cost is incident to the solving means. This is one of the great advantages of the present invention.

## Claims

1. A caliper support mechanism of a disc brake, comprising:
a caliper (5) including a lug (5C) having a bolt hole (10) and a stepped portion (11);
a support bracket (1) having a pin guide hole (7);
a bolt inserted into said bolt hole of said lug (5C) of said caliper (5); and
a slide pin (8) comprising a threaded hole (8C) and a head (8A) having a flat side (8B), said flat side of said slide pin (8) is brought into contact with an end face (21) of said stepped portion of said lug (5C), said bolt being screwed into said threaded hole (8C) of said slide pin (8) and tightened thereto, said slide pin (8) being slidably inserted into said pin guide hole (7) of said support bracket (1),
**characterized in that**
said end face (21) of said lug (5C) being arcuately incurved and a center of a circle defined by said arcuately incurved end face (21) of said lug (5C) is coincident with a center of said bolt hole (10).

2. A caliper support mechanism according to Claim 1, **characterized in that** said arcuately incurved end face (21) of said lug (5C) is directed obliquely and outwardly with respect to a horizontal line (H) in said lug (5C) of said caliper (5).

3. A caliper support mechanism according to claim 1 or 2, **characterized in that** said end face (21) of said lug (5C) is slanted at an angle within a range of 0° to 90° to the horizontal.

4. A caliper support mechanism according to at least one of the preceding claims 1 to 3, **characterized in that** said end face (21) of said lug (5C) is slanted at an angle within a range of 10° to 80° to the horizontal.

5. A caliper support mechanism according to at least one of the preceding claims 1 to 4, **characterized in that** said end face (21) of said lug (5C) is slanted at an angle of 30° to the horizontal.

## Patentansprüche

1. Sattelträgerstützvorrichtung einer Scheibenbremse mit:
einem Sattel (5), der einen Ansatz (5C) enthält, der eine Bolzenbohrung (10) und
einen gestuften Abschnitt (11) hat;
eine Trägerhalterung (1), die eine Bolzenführungsbohrung (7) hat;
einen Bolzen, eingesetzt in die Bolzenbohrung des Ansatzes (5C) des Sattels (5); und
einem Gleitbolzen (8) mit einer Gewindebohrung (8C) und einem Kopf (8A), der eine flache Seite (8B) hat, wobei die flache Seite des Gleitstiftes (8) mit einer Endfläche (21) des gestuften Abschnittes (5C) in Kontakt gebracht ist, der Bolzen in die Gewindebohrung (8C) des Gleitbolzens (8) verschraubt und darin festgezogen ist, der Gleitbolzen (8) gleitbar in die Bolzenführungsbohrung (7) der Trägerhalterung (1) eingesetzt ist,
**dadurch gekennzeichnet, daß**
die Endfläche (21) des Ansatzes (5C) bogenförmig eingekrümmt ist und eine Mitte eines Kreises, bestimmt durch die bogenförmig eingekrümmte Endfläche (21) des Ansatzes (5C), mit einer Mitte der Bolzenbohrung (10) übereinstimmt.

2. Sattelträgerstützvorrichtung nach Anspruch 1, **dadurch gekennzeichnet, daß** die bogenförmig eingekrümmte Endfläche (21) des Ansatzes (5C) schräg und nach außen in Bezug auf eine horizontale Linie (H) in dem Ansatz (5C) des Sattels (5) gerichtet ist.

3. Sattelträgerstützvorrichtung nach Anspruch 1 oder 2, **dadurch gekennzeichnet, daß** die Endfläche (21) des Ansatzes (5C) unter einem Winkel innerhalb eines Bereiches von 0° bis 90° zu der Horizontalen geneigt ist.

4. Sattelträgerstützvorrichtung nach zumindest einem der vorhergehenden Ansprüche 1 bis 3, **dadurch gekennzeichnet, daß** die Endfläche (21) des Ansatzes (5C) unter einem Winkel innerhalb eines Bereiches von 10° bis 80° zu der Horizontalen geneigt ist.

5. Sattelträgerstützvorrichtung nach zumindest einem der vorhergehenden Ansprüche 1 bis 4, **dadurch gekennzeichnet, daß** die Endfläche (21) des Ansatzes (5C) unter einem Winkel von 30° zu der Horizontalen geneigt ist.

## Revendications

1. Mécanisme de support d'étrier d'un frein à disque, comportant :
un étrier (5) comprenant une patte (5C) ayant un trou de boulon (10) et une partie étagée (11);
un support (1) ayant un trou de guidage d'axe (7);
un boulon inséré dans ledit trou de boulon de ladite patte (5C) dudit étrier (5); et
un axe de coulissement (8) comportant un trou taraudé (8C) et une tête (8A) ayant un côté plat (8B), ledit côté plat dudit axe de coulissement (8) est amené en contact avec une face d'extrémité (21) de ladite partie étagée de ladite patte (5C), ledit boulon étant vissé dans ledit trou taraudé (8C) dudit axe de coulissement (8) et serré, ledit axe de coulissement (8) étant inséré de façon coulissante dans ledit trou de guidage d'axe (7) dudit support (1),
**caractérisé en ce que**
ladite face d'extrémité (21) de ladite patte (5C) étant incurvée de manière courbe et un centre d'un cercle défini par ladite face d'extrémité incurvée de manière courbe (21) de ladite patte (5C) coïncide avec un centre dudit trou de boulon (10).

2. Mécanisme de support d'étrier selon la revendication 1, **caractérisé en ce que** ladite face d'extrémité incurvée de manière courbe (21) de ladite patte (5C) est orientée en oblique et vers l'extérieur par rapport à un axe horizontal (H) dans ladite patte (5C) dudit étrier (5).

3. Mécanisme de support d'étrier selon la revendication 1 ou 2, **caractérisé en ce que** ladite face d'extrémité (21) de ladite patte (5C) est inclinée avec un angle dans une plage de 0° à 90° par rapport à l'horizontale.

4. Mécanisme de support d'étrier selon au moins une des revendications précédentes 1 à 3, **caractérisé en ce que** ladite face d'extrémité (21) de ladite patte (5C) est inclinée avec un angle dans une plage de 10° à 80° par rapport à l'horizontale.

5. Mécanisme de support d'étrier selon au moins une des revendications précédentes 1 à 4, **caractérisé en ce que** ladite face d'extrémité (21) de ladite patte (5C) est inclinée avec un angle de 30° par rapport à l'horizontale.
